# EUROPÄISCHE PATENTSCHRIFT

(11) **EP 2 151 598 B1**
(45) Veröffentlichungstag und Bekanntmachung des Hinweises auf die Patenterteilung: **09.03.2011**
(21) Anmeldenummer: 09164847.7
(22) Anmeldetag: 08.07.2009
(51) Int. Cl.: F16F 9/58

(54) **Schwingungsdämpfer mit einer Zuganschlagfeder**
Vibration absorber with a buffer spring
Amortisseur d'oscillations doté d'un ressort de butée de traction

(30) Priorität: 08.08.2008 DE 102008041114
(43) Veröffentlichungstag der Anmeldung: 10.02.2010
(73) Patentinhaber: ZF Friedrichshafen AG, 88038 Friedrichshafen (DE)
(72) Erfinder: Hertz, Wolfgang, 53757 Sankt Augustin (DE); Schmidt, Stefan, 53783 Eitorf (DE); Schreiner, Klaus, 51570 Windeck (DE)

(56) Entgegenhaltungen:
- DE-A1- 2 655 705
- DE-A1- 2 853 914
- DE-A1- 4 408 405
- DE-A1- 19 626 143
- DE-A1-102007 014 247
- DE-A1-102008 010 639

## Beschreibung

Die Erfindung betrifft einen Schwingungsdämpfer mit einer Zuganschlagfeder gemäß dem Oberbegriff von Patentanspruch 1.

Aus der DE 196 26 143 A1 ist ein Schwingungsdämpfer mit einer Zuganschlagfeder bekannt, die einen Federteller aufweist, der auf der Kolbenstange gleitend gelagert ist. Ein zweites Ende stützt sich direkt am Kolben ab. Bei einer Schwing- oder Federungsbewegung des gesamten Schwingungsdämpfers führt die Zuganschlagfeder dann eine eigene Schwingbewegung aus, wenn der Kolben die Zuganschlagfeder noch nicht gegen die Kolbenstangenführung verspannt hat. Im entspannten Zustand der Zuganschlagfeder kann diese bedingt durch die Eigenschwingungsbewegungen hörbare Geräusche verursachen.

Die DE 44 08 405 A1 beschreibt eine sehr ähnliche Variante, wobei die Zuganschlagfeder über Federtellern aus Kunststoff auf der Kolbenstange geführt ist. Der Werkstoff des Federtellers wird unter dem Gesichtspunkt der Reibungsarmut zur Kolbenstange ausgewählt, um deren Oberfläche nicht zu beschädigen.

In der DE 10 2008 010 639 wird ein Federteller für eine Zuganschlagfeder vorgeschlagen, der aus einem äußeren metallischen Federteller und einer inneren Kunststoffhülse besteht, die zudem noch einen Schmierfilm mit der Kolbenstange bildet.

Aus der DE 26 55 705 A1 oder der DE 28 53 914 A1 ist ein Zuganschlag bekannt, dessen Schraubdruckfeder mit einem geschlitzten und radial nach außen elastischen Dämpfring zusammenwirkt. Der Dämpfring steht dadurch in Reibkontakt mit der Innenwandung des Zylinders. Über den Reibkontakt übernimmt der Dämpfring lediglich eine Schaltfunktion, um den Dämpfmediumstrom zu beeinflussen.

Die Aufgabe der vorliegenden Erfindung besteht darin, die aus dem Stand der Technik bekannten Geräuschprobleme aufgrund der Eigenschwingung der Zuganschlagfeder zu beheben.

Erfindungsgemäß wird die Aufgabe dadurch gelöst, die Zuganschlagfeder im entspannten Zustand eine Querkraft auf die Kolbenstange ausübt.

Die Querkraft wirkt als Dämpfkraft gegen die Eigenschwingbewegung der entspannten Feder, so dass das Geräuschproblem, wie Versuchsreihen gezeigt haben, gelöst ist oder zumindest minimiert wird.

Im Hinblick auf eine einfache Konstruktion, so dass keine zusätzlichen Bauteile benötigt werden, weist die Zuganschlagfeder eine Mittellinie auf, die zumindest auf einer Teillänge schräg zur Kolbenstange verläuft.

Bei einer ersten Variante weist die Zuganschlagfeder bezogen auf eine durch ihre Endwindung beschriebene Ebene zu einer durch diese Ebene im rechten Winkel verlaufenden Längsachse der Kolbenstange eine zumindest auf einem Längenabschnitt schräg verlaufende Mittellinie auf. Man stellt bewusst eine schräg gewickelte Feder her. Eine derartige Feder, die bisher z. B. durch Nichteinhaltung der Herstelltoleranzen produziert wurde und als Ausschuss angesehen wurde, erzielt den gewünschten Effekt.

Die Mittellinie der Zuganschlagfeder muss nicht unbedingt gerade sein, sondern kann auch bogenförmig verlaufen.

Es besteht auch die Möglichkeit, dass die Zuganschlagfeder über einen langen Abschnitt rechtwinklig zur Endwindung gewickelt ist, jedoch zwischen zwei Windungen einen radialen Versatz ihrer Mittellinien aufweist. Mit dieser Wickeltechnik wird im eingebauten Zustand der Zuganschlagfeder eine Querkraft erzeugt.

Dabei ist es sinnvoll, wenn der radiale Versatz zwischen den beiden Endwindungen vorliegt, da man dann aufgrund der Federlänge auch bei einem größeren Versatz eine vergleichsweise moderate Querkraft erzeugen kann.

Bei einer Alternativvariante verläuft eine zylinderseitige Abstützfläche für die Zuganschlagfeder schräg zur Längsachse der Kolbenstange. Damit schneidet die Mittellinie der Zuganschlagfeder die Längsachse der Kolbenstange, so dass auf diese eine Querkraft ausgeübt wird.

Für den Reibkontakt zwischen der Zuganschlagfeder und der Kolbenstange trägt die Zuganschlagfeder einen kreisringförmigen Federteller, der mit seiner Durchgangsöffnung exzentrisch an der Kolbenstange anliegt. Durch die exzentrische Lagerung des Federtellers kann sehr leicht die Funktionsfähigkeit der Dämpfung der Eigenschwingung der Zuganschlagfeder überprüft werden.

Die Exzentrizität kann durch eine schräge Zuganschlagfeder in Verbindung mit einer Durchgangsöffnung erreicht werden, deren Nennmaß größer ist als der Kolbenstangendurchmesser. Man kann aber auch alternativ eine gerade oder auch beliebig gewickelte Zuganschlagfeder verwenden und diese mit einem Federteller kombinieren, dessen Führungshülse für die Zuganschlagfeder exzentrisch zur Kolbenstangenlängsachse ausgeführt ist. Über die erzwungene Desachsierung der Zuganschlagfeder wird eine Querkraft der Zuganschlagfeder auf die Kolbenstange erreicht.

Für eine definierte Reibkraft in Verbindung mit einer Schonung der Oberfläche der Kolbenstangenführung weist der Federteller in Richtung der Kolbenstange eine Reibeinrichtung auf.

Anhand der folgenden Figurenbeschreibung soll die Erfindung näher erläutert werden.

Es zeigt:
- Fig. 1: Schwingungsdämpfer mit einer zur Längsachse der Kolbenstange schräg gewickelten Zuganschlagfeder
- Fig. 2: Schwingungsdämpfer mit schräg gestellter Abstützfläche für die Zuganschlagfeder
- Fig. 3: Schwingungsdämpfer mit einem radialen Versatz zweier Windungen.
- Fig. 4: Schwingungsdämpfer mit einer exzentrischen Führung über einen Federteller

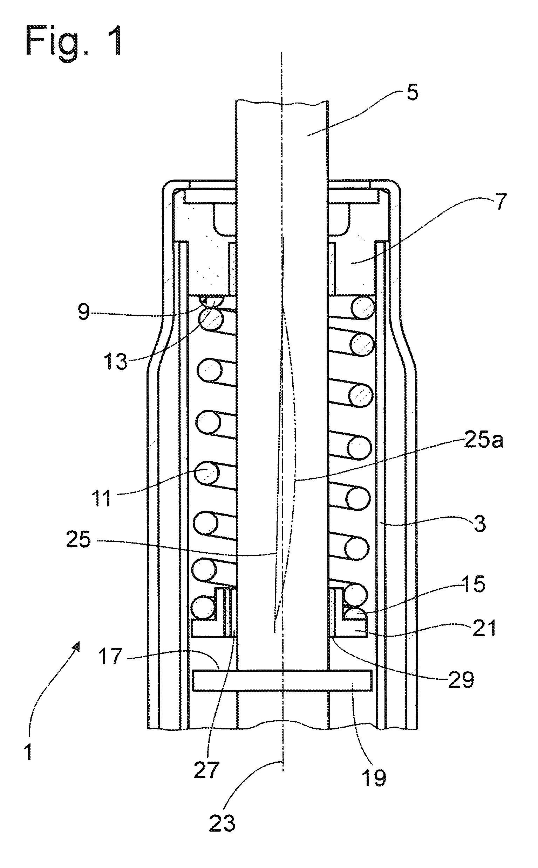

Die Fig. 1 zeigt einen Ausschnitt aus einem Schwingungsdämpfer 1, der einen Zylinder 3 aufweist, in dem eine Kolbenstange 5 axial beweglich gelagert ist. Endseitig wird der Zylinder von einer Kolbenstangenführung 7 abgeschlossen, die eine erste Abstützfläche 9 für eine Zuganschlagfeder 11 aufweist. Bei der Zuganschlagfeder 11 handelt es sich um eine zylindrische Schraubendruckfeder, deren Endwindungen 13;15 plan geschliffen sind. Eine erste Endwindung 13 liegt an der ersten Abstützfläche 9 axial fest an. Die axial feste Einspannung kann beliebig erfolgen, z. B. durch eine Rinne im Zylinder, einer Halterung an der Kolbenstange oder durch eine einfache Presspassung zwischen der Zuganschlagfeder und dem Zylinderinnendurchmesser. Eine zweite Abstützfläche 17 wird von einem kolbenstangenseitigen Anschlagring 19 gebildet. Die in Richtung der zweiten Abstützfläche 17 weisende zweite Endwindung 15 der Zuganschlagfeder 11 stützt sich an einem kreisringförmigen Federteller 21 ab.

Die Zuganschlagfeder 11 weist bezogen auf eine durch ihre erste Endwindung 13 beschriebene Ebene zu einer durch diese Ebene im rechten Winkel verlaufenden Längsachse 23 der Kolbenstange 5 eine zumindest auf einem Längenabschnitt schräg verlaufende Mittellinie 25 auf. Zwischen den gegenüberliegenden Endwindungen 13;15 der Zuganschlagfeder 11 besteht ein radialer Versatz, der dazu führt, dass der Federteller 21 einseitig an der Kolbenstange anliegt, wie durch einen Spalt 27 zwischen einer Durchgangsöffnung des Federtellers 21 und der Oberfläche der Kolbenstange 5 deutlich wird. Die zumindest auf einer Teillänge schräg verlaufende Mittellinie 25 der Zuganschlagfeder 11 führt dazu, dass die Zuganschlagfeder 11 im entspannten Zustand eine Querkraft auf die Kolbenstange 5 ausübt. Alternativ kann die Mittellinie 25, wie durch eine Strich-Zweipunkt-Line 25a dargestellt ist, auch bogenförmig verlaufen. Der entspannte Zustand der Zuganschlagfeder liegt dann vor, wenn, wie in der Fig. 1 dargestellt ist, zwischen der zweiten Endwindung 15 bzw. dem Federteller 21 und der kolbenstangenseitigen Abstützfläche 17 ein axialer Abstand vorliegt. Die Querkraft der Zuganschlagfeder erzeugt über den Federteller 21 eine parallel zur Oberfläche der Kolbenstange 5 wirkende Reibkraft. Sowohl die Querkraft als auch die Reibkraft wirken auf Eigenschwingbewegungen der entspannten Zuganschlagfeder 11 dämpfend.

Zur Schonung der Kolbenstangenoberfläche kann der Federteller 21 in Richtung der Kolbenstange 5 eine Reibeinrichtung 29 aufweisen, die z. B. von einem Elastomer gebildet wird.

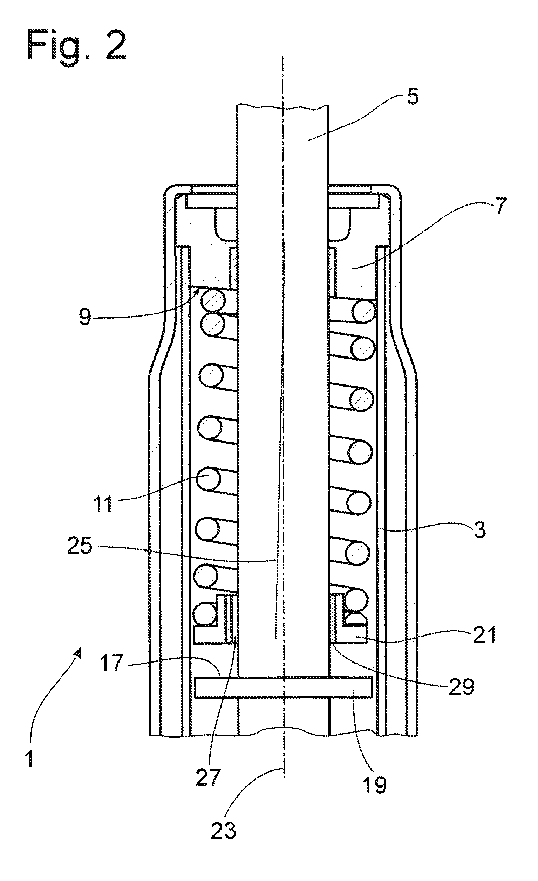

Die Zuganschlagfeder 11 nach der Fig. 2 folgt dem Prinzip der Fig. 1. Abweichend kommt eine konventionell gewickelte zylindrische Schraubendruckfeder zur Anwendung, die sich an einer zylinderseitigen schräg zur Längsachse 23 der Kolbenstange 5 verlaufenden ersten Abstützfläche 9 abstützt. In diesem Fall ist die Unterseite der Kolbenstangenführung 7 schräg zur Längsachse 23 der Kolbenstange 5 ausgeführt. Alternativ kann man auch eine Zwischenscheibe mit einem Keilprofil zwischen der Kolbenstangenführung 7 und der Zuganschlagfeder 11 verwenden.

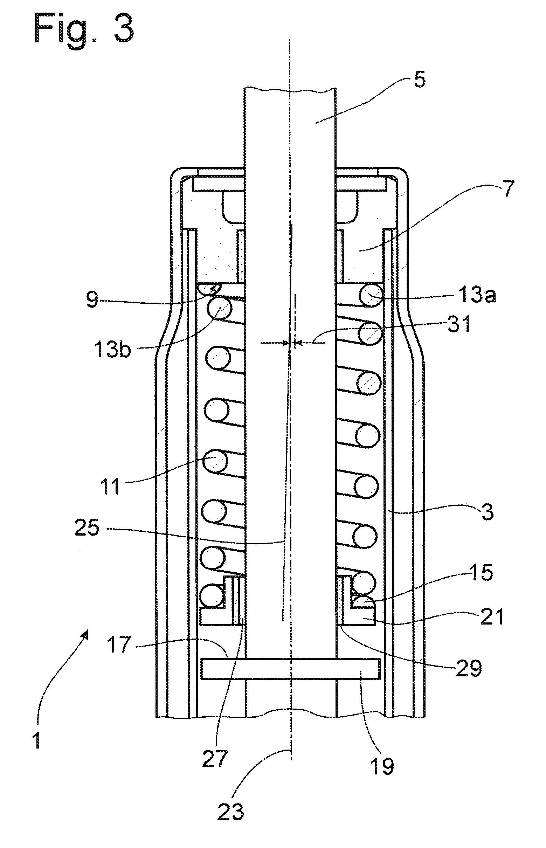

Die Variante nach Fig. 3 zeigt eine Zuganschlagfeder 11, deren beiden Endwindungen 13a; 13b einen radialen Versatz 31 ihrer Mittellinien aufweisen. Die ansonsten konventionell gewickelte Zuganschlagfeder 11 wird dadurch in die dargestellte axial entspannte Einbaulage gezwungen.

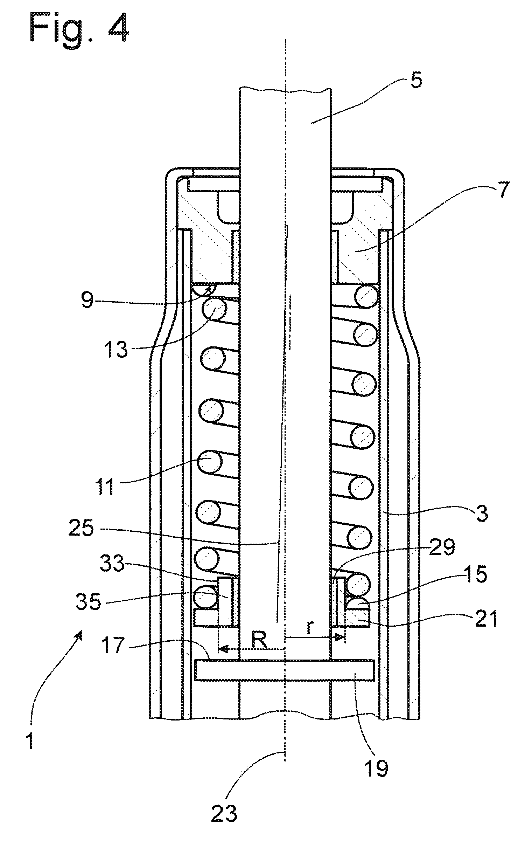

In der Fig. 4 kommt ein Federteller 21 zur Anwendung, dessen äußere Mantelfläche 33 auf einer Führungshülse 35 exzentrisch zur Längsachse der Kolbenstange 5 verläuft. Man kann z. B. die Durchgangsöffnung der Führungshülse 35 bei konstanter Wandstärker der Führungshülse 35 exzentrisch zur Kolbenstangenlängsachse 23 verlaufen lassen oder die Durchgangsöffnung konzentrisch zur Kolbenstangenlängsachse 23 ausführen und die Wandstärke der Führungshülse 35 über den Umfangswinkel variieren. In beiden Fällen ergibt sich ein Radius R und ein Radius r zwischen der Mantelfläche 33 und der Kolbenstangenlängsachse 23, so dass eine Schrägstellung der Zuganschlagfeder 11 erreicht wird.

## Patentansprüche

1. Schwingungsdämpfer (1), umfassend einen Zylinder (3), in dem eine Kolbenstange (5) eine axiale Hubbewegung ausführt, wobei ab einer definierte Hublage der Kolbenstange (5) der weiteren Hubbewegung eine schraubenförmige Zuganschlagfeder (11) entgegenwirkt, die sich zumindest mittelbar mit mindestens einem Ende an der Kolbenstange (5) radial abstützt,
**dadurch gekennzeichnet,**
**dass** die Zuganschlagfeder (11) im entspannten Zustand eine Querkraft auf die Kolbenstange (5) ausübt.

2. Schwingungsdämpfer nach Anspruch 1,
**dadurch gekennzeichnet,**
**dass** die Zuganschlagfeder (11) eine Mittellinie (25;25a) aufweist, die zumindest auf einer Teillänge schräg zur Kolbenstange (5) verläuft.

3. Schwingungsdämpfer nach Anspruch 1,
**dadurch gekennzeichnet,**
**dass** die Zuganschlagfeder zwischen zwei Windungen einen radialen Versatz ihrer Mittellinien aufweist.

4. Schwingungsdämpfer nach Anspruch 3,
**dadurch gekennzeichnet,**
**dass** der radiale Versatz zwischen den beiden Endwindungen vorliegt.

5. Schwingungsdämpfer nach Anspruch 2,
**dadurch gekennzeichnet,**
**dass** die Zuganschlagfeder (11) bezogen auf eine durch ihre Endwindung (9;11) beschriebene Ebene zu einer durch diese Ebene im rechten Winkel verlaufenden Längsachse (23) der Kolbenstange (5) eine zumindest auf einem Längenabschnitt schräg verlaufende Mittellinie (25;25a) aufweist.

6. Schwingungsdämpfer nach Anspruch 2,
**dadurch gekennzeichnet,**
**dass** eine zylinderseitige Abstützfläche (9) für die Zuganschlagfeder (11) schräg zur Längsachse (23) der Kolbenstange (5) verläuft.

7. Schwingungsdämpfer nach Anspruch 2,
**dadurch gekennzeichnet,**
**dass** die Mittellinie (25a) der Zuganschlagfeder (11) bogenförmig verläuft.

8. Schwingungsdämpfer nach einem der Ansprüche 1 bis 7,
**dadurch gekennzeichnet,**
**dass** die Zuganschlagfeder (11) einen kreisringförmigen Federteller (21) trägt, der mit seiner Durchgangsöffnung exzentrisch an der Kolbenstange (5) anliegt.

9. Schwingungsdämpfer nach Anspruch 8,
**dadurch gekennzeichnet,**
**dass** eine Führungshülse (35) des Federtellers (21) für die Zuganschlagfeder (11) exzentrisch zur Kolbenstangenlängsachse (23) ausgeführt ist.

10. Schwingungsdämpfer nach Anspruch 8,
**dadurch gekennzeichnet,**
**dass** der Federteller (21) in Richtung der Kolbenstange (5) eine Reibeinrichtung (29) aufweist.

## Claims

1. Vibration damper (1), comprising a cylinder (3) in which a piston rod (5) executes an axial lifting movement, wherein, from a defined lifting position of the piston rod (5), the further lifting movement is counteracted by a helical buffer spring (11) which is supported radially at least indirectly with at least one end on the piston rod (5), **characterized in that** the buffer spring (11), in the relaxed state, exerts a transverse force upon the piston rod (5).

2. Vibration damper according to Claim 1, **characterized in that** the buffer spring (11) has a centre line (25; 25a) which, at least over a part-length, runs obliquely with respect to the piston rod (5).

3. Vibration damper according to Claim 1, **characterized in that** the buffer spring has a radial offset of its centre lines between two turns.

4. Vibration damper according to Claim 3, **characterized in that** the radial offset is present between the two end turns.

5. Vibration damper according to Claim 2, **characterized in that** the buffer spring (11) has with respect to a plane described by its end turn (9; 11), in relation to a longitudinal axis (23) of the piston rod (5) which runs through this plane at right angles, a centre line (25, 25a) which, at least over a portion of length, runs obliquely.

6. Vibration damper according to Claim 2, **characterized in that** a cylinder-side supporting surface (9) for the buffer spring (11) runs obliquely with respect to the longitudinal axis (23) of the piston rod (5).

7. Vibration damper according to Claim 2, **characterized in that** the centre line (25a) of the buffer spring (11) runs arcuately.

8. Vibration damper according to one of Claims 1 to 7, **characterized in that** the buffer spring (11) carries an annular spring plate (21) which bears eccentrically with its passage orifice against the piston rod (5).

9. Vibration damper according to Claim 8, **characterized in that** a guide sleeve (35) of the spring plate (21) for the buffer spring (11) is formed eccentrically with respect to the piston-rod longitudinal axis (23).

10. Vibration damper according to Claim 8, **characterized in that** the spring plate (21) has a friction device (29) in the direction of the piston rod (5).

## Revendications

1. Amortisseur d'oscillations (1), comprenant un cylindre (3), dans lequel une tige de piston (5) effectue un mouvement de course axiale, et, à partir d'une position de course définie de la tige de piston (5), un ressort de butée de traction hélicoïdal (11) qui s'appuie radialement au moins de manière indirecte par au moins une extrémité contre la tige de piston (5), s'opposant au mouvement de course subséquent,
**caractérisé en ce que**
le ressort de butée de traction (11) exerce dans l'état détendu une force transversale sur la tige de piston (5).

2. Amortisseur d'oscillations selon la revendication 1,
**caractérisé en ce que**
le ressort de butée de traction (11) présente un axe médian (25 ; 25a) qui s'étend obliquement par rapport à la tige de piston (5) au moins sur une longueur partielle.

3. Amortisseur d'oscillations selon la revendication 1,
**caractérisé en ce que**
le ressort de butée de traction présente entre deux enroulements un décalage radial de son axe médian.

4. Amortisseur d'oscillations selon la revendication 3,
**caractérisé en ce que**
le décalage radial se situe entre les deux enroulements d'extrémité.

5. Amortisseur d'oscillations selon la revendication 2,
**caractérisé en ce que**
le ressort de butée de traction (11) présente un axe médian (25 ; 25a) s'étendant obliquement au moins sur une portion longitudinale par rapport à un plan décrit par son enroulement d'extrémité (9 ; 11), vers un axe longitudinal (23) de la tige de piston (5) s'étendant à angle droit à travers ce plan.

6. Amortisseur d'oscillations selon la revendication 2,
**caractérisé en ce que**
qu'une surface de support (9) du côté du cylindre pour le ressort de butée de traction (11) s'étend obliquement par rapport à l'axe longitudinal (23) de la tige de piston (5).

7. Amortisseur d'oscillations selon la revendication 2,
**caractérisé en ce que**
l'axe médian (25a) du ressort de butée de traction (11) s'étend en forme d'arc.

8. Amortisseur d'oscillations selon l'une quelconque des revendications 1 à 7,
**caractérisé en ce que**
le ressort de butée de traction (11) porte une cuvette de ressort de forme annulaire circulaire (21), qui s'applique avec son ouverture de passage de manière excentrique contre la tige de piston (5).

9. Amortisseur d'oscillations selon la revendication 8,
**caractérisé en ce**
**qu'**une douille de guidage (35) de la cuvette de ressort (21) pour le ressort de butée de traction (11) est réalisée de manière excentrique par rapport à l'axe longitudinal de la tige de piston (23).

10. Amortisseur d'oscillations selon la revendication 8,
**caractérisé en ce que**
la cuvette de ressort (21) présente un dispositif de frottement (29) dans la direction de la tige de piston (5).
